# EUROPÄISCHE PATENTSCHRIFT

(11) **EP 2 858 212 B1**
(45) Veröffentlichungstag und Bekanntmachung des Hinweises auf die Patenterteilung: **06.01.2016**
(21) Anmeldenummer: 13186829.1
(22) Anmeldetag: 01.10.2013
(51) Int. Cl.: H02K 1/14, H02K 15/00, H02K 15/095, H02K 3/52, H02K 15/06

(54) **Wickelverfahren für eine Statorwicklung und entsprechender Stator**
Winding method for a stator coil and corresponding stator
Procédé d'enroulement pour un enroulement de stator et stator correspondant

(43) Veröffentlichungstag der Anmeldung: 08.04.2015
(73) Patentinhaber: Siemens Aktiengesellschaft, 80333 München (DE)
(72) Erfinder: Eckert, Rainer, 97616 Bad Neustadt / Herschfeld (DE); Pawellek, Jürgen, 97618 Unsleben (DE)

(56) Entgegenhaltungen:
- EP-A1- 1 589 636
- WO-A1-2006/120054
- JP-A- 2011 205 875

## Beschreibung

Die vorliegende Erfindung betrifft ein Wickelverfahren für eine Statorwicklung eines Stators einer elektrischen Maschine,
- wobei der Stator eine Anzahl von Statorzähnen aufweist, die, ausgehend von einer in einem radialen Abstand von einer Zentralachse des Stators um die Zentralachse umlaufenden Verbindungsstruktur, nach radial außen ragen,
- wobei auf die Statorzähne von radial außen Spulenträger aufgesteckt werden.

Die vorliegende Erfindung betrifft weiterhin einen Stator einer elektrischen Maschine,
- wobei der Stator eine Anzahl von Statorzähnen aufweist, die, ausgehend von einer in einem radialen Abstand von einer Zentralachse des Stators um die Zentralachse umlaufenden Verbindungsstruktur, nach radial außen ragen,
- wobei auf die Statorzähne von radial außen Spulenträger aufgesteckt sind.

Ein derartiger Stator kann beispielsweise der Stator eines Außenläufers sein. Alternativ kann der Stator das Innenteil eines sogenannten Stern-Joch-Pakets sein. Ein derartiges Stern-Joch-Paket ist aus der EP 2 549 622 A1 bekannt

Weiterer Stand der Technik ist WO 2006/120054 A1.

Beim Herstellen einer Statorwicklung eines Stators, dessen Statorzähne nach radial außen ragen, werden im Stand der Technik oftmals die Spulenträger einzeln mit einem jeweiligen Leiterdraht bewickelt. Danach werden die Spulenträger auf die Statorzähne aufgesteckt. Im Falle eines als Stern-Joch-Paket ausgebildeten Stators wird sodann das Joch auf den Stern aufgeschoben. Danach werden die sogenannten Phasentrenner eingeschossen, der Schaltungsträger aufgesteckt und innerhalb des Schaltungsträgers die Leiterdrähte der einzeln auf die Spulenträger gewickelten Leiterdrähte miteinander verbunden.

Insbesondere das Verbinden der Leiterdrähte der einzelnen Spulen miteinander ist fertigungstechnisch aufwändig und fehlerträchtig. Falls es manuell vorgenommen wird, ist es darüber hinaus zeitaufwändig und umständlich.

Die Aufgabe der vorliegenden Erfindung besteht darin, Möglichkeiten zu schaffen, einen Stator, der nach außen ragende Statorzähne aufweist, auf einfachere Weise zu schalten.

Die Aufgabe wird durch ein Wickelverfahren mit den Merkmalen des Anspruchs 1 gelöst. Vorteilhafte Ausgestaltungen des erfindungsgemäßen Wickelverfahrens sind Gegenstand der abhängigen Ansprüche 2 und 3.

Erfindungsgemäß wird ein Wickelverfahren für eine Statorwicklung eines Stators dadurch ausgestaltet,
- dass an einem axialen Ende der Verbindungsstruktur nacheinander eine Anzahl von Schaltungsträgern aufgesetzt wird, so dass die Schaltungsträger in Richtung der Zentralachse des Stators gesehen eine Sequenz bilden,
- dass nach dem Aufsetzen je eines einzelnen der Schaltungsträger für jeweils eine Phase der Statorwicklung ein jeweiliger Leiterdraht nacheinander auf der jeweiligen Phase zugeordnete Spulenträger gewickelt wird, so dass der auf die jeweiligen Spulenträger gewickelte jeweilige Leiterdraht jeweilige Spulen der Statorwicklung bildet,
- dass der jeweilige Leiterdraht nach dem Bewickeln je eines der jeweiligen Phase zugeordneten Spulenträgers über den jeweiligen Schaltungsträger zum jeweils nächsten der jeweiligen Phase zugeordneten Spulenträger geführt wird und
- dass, bezogen auf die Sequenz von Schaltungsträgern, der jeweils nächste Schaltungsträger erst nach dem vollständigen Bewickeln der der jeweils vorhergehenden Phase zugeordneten Spulenträger auf den in der Sequenz von Schaltungsträgern jeweils vorhergehenden Schaltungsträger aufgesetzt wird.

Es ist möglich, dass bereits vor dem Bewickeln der Spulenträger alle Spulenträger auf die Statorzähne aufgesteckt werden. Vorzugsweise jedoch werden die der jeweiligen Phase zugeordneten Spulenträger erst nach dem vollständigen Bewickeln der der jeweils vorhergehenden Phase zugeordneten Spulenträger auf die Statorzähne aufgesteckt. Dadurch ergibt sich - mit Ausnahme der Spulenträger, die der zuletzt gewickelten Phase zugeordnet sind, - beim Wickeln eine verbesserte Zugänglichkeit der Spulenträger.

Wie bereits erwähnt, kann das erfindungsgemäße Wickelverfahren bei einer Außenläufermaschine angewendet werden. Ihre vollen Vorteile zeigt die vorliegende Erfindung jedoch, wenn sie bei einem als Stern-Joch-Paket ausgebildeten Stator angewendet wird, wenn also nach dem vollständigen Bewickeln der Spulenträger aller Phasen axial zur Zentralachse des Stators ein Statorjoch auf die Statorzähne aufgeschoben wird.

Die Aufgabe wird weiterhin durch einen Stator mit den Merkmalen des Anspruchs 4 gelöst. Eine vorteilhafte Ausgestaltung des erfindungsgemäßen Stators ist Gegenstand des abhängigen Anspruchs 5.

Erfindungsgemäß ist ein Stator der eingangs genannten Art dadurch ausgestaltet,
- dass an einem axialen Ende der Verbindungsstruktur eine Anzahl von Schaltungsträgern in Richtung der Zentralachse des Stators gesehen in einer Sequenz aufeinander gesetzt ist,
- dass für jeweils eine Phase der Statorwicklung ein jeweiliger Leiterdraht nacheinander auf der jeweiligen Phase zugeordnete Spulenträger gewickelt ist, so dass der auf die jeweiligen Spulenträger gewickelte jeweilige Leiterdraht jeweilige Spulen der Statorwicklung bildet, und
- dass der jeweilige Leiterdraht über einen der jeweiligen Phase zugeordneten Schaltungsträger zum jeweils nächsten der jeweiligen Phase zugeordneten Spulenträger geführt ist.

im Falle der Ausgestaltung des Stators als Stern-Joch-Paket sind weiterhin die Statorzähne radial außen von einem axial auf die Statorzähne aufgeschobenen Statorjoch umgeben.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen unbewickelten Stator,
- FIG 2: einen einzelnen Spulenträger,
- FIG 3: einen mit einer Teilwicklung bewickelten Stator,
- FIG 4: einen mit zwei Teilwicklungen bewickelten Stator,
- FIG 5: einen vollständig bewickelten Stator,
- FIG 6: mehrere Schaltungsträger in auseinandergezogener Darstellung,
- FIG 7: die Schaltungsträger von FIG 6 in aneinander angrenzender Darstellung und
- FIG 8: einen als Stern-Joch-Paket ausgebildeten Stator.

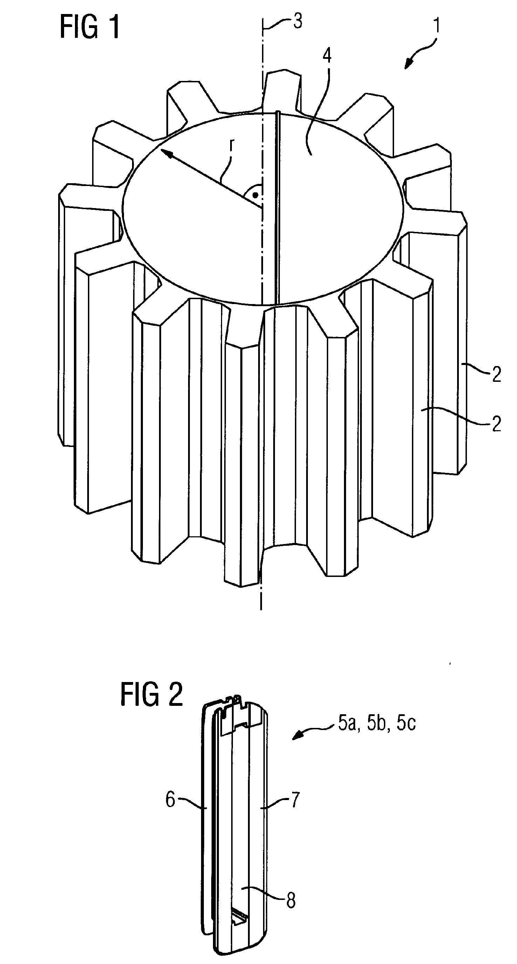

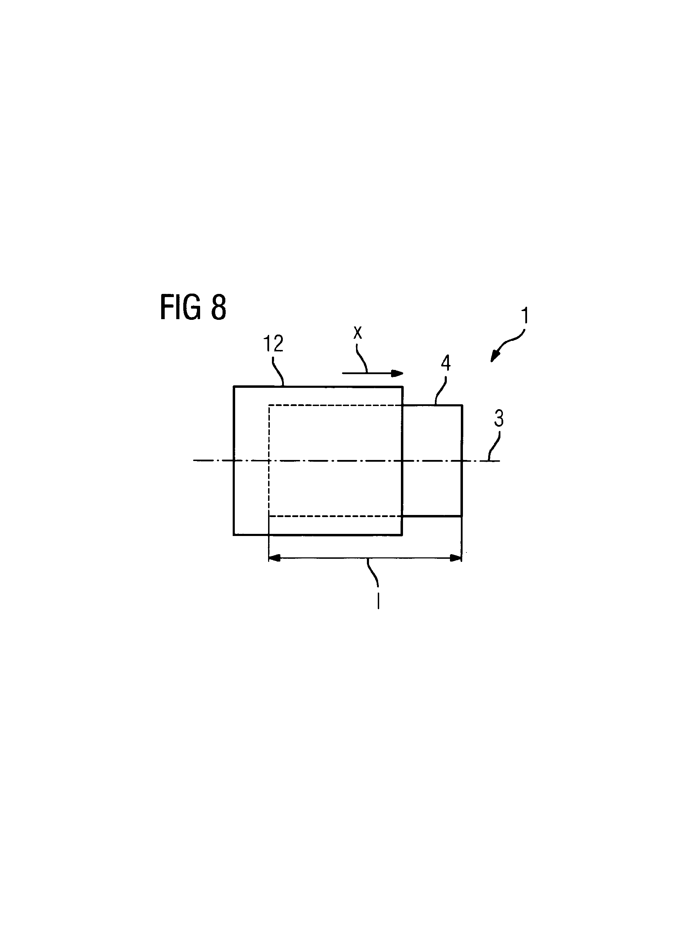

Gemäß FIG 1 weist ein Stator 1 eine Anzahl von Statorzähnen 2 auf. Die Statorzähne 2 sind gleichmäßig um eine Zentralachse 3 des Stators 1 herum verteilt angeordnet. Sie ragen, ausgehend von einer Verbindungsstruktur 4, nach radial außen, d.h. von der Zentralachse 3 weg. Die Verbindungsstruktur 4 weist einen radialen Abstand r von der Zentralachse 3 auf. Sie erstreckt sich in Richtung der Zentralachse 3 gesehen über eine axiale Länge 1 (siehe FIG 8) und läuft tangential um die Zentralachse 3 herum gesehen um die Zentralachse 3 um.

FIG 1 zeigt den Stator 1 vor dem Wickeln einer Statorwicklung. Zum Wickeln der Statorwicklung werden auf die Statorzähne 2 von radial außen Spulenträger 5a bis 5c aufgesteckt. Die Spulenträger 5a bis 5c weisen gemäß FIG 2 in der Regel einen Innenflansch 6, einen Außenflansch 7 und eine Zwischenstruktur 8 auf. Mit dem jeweiligen Innenflansch 6 liegen die Spulenträger 5a bis 5c im aufgesteckten Zustand an der Verbindungsstruktur 4 an. Der jeweilige Außenflansch 6 ist von der Verbindungsstruktur 4 beabstandet. Über die jeweilige Zwischenstruktur 8 ist der jeweilige Innenflansch 6 mit dem jeweiligen Außenflansch 7 verbunden. Die jeweilige Zwischenstruktur 8 umgreift den jeweiligen Statorzahn 2. Im Querschnitt gesehen weisen die Spulenträger 5a bis 5c entsprechend der Darstellung in FIG 2 somit einen H-ähnlichen Querschnitt auf.

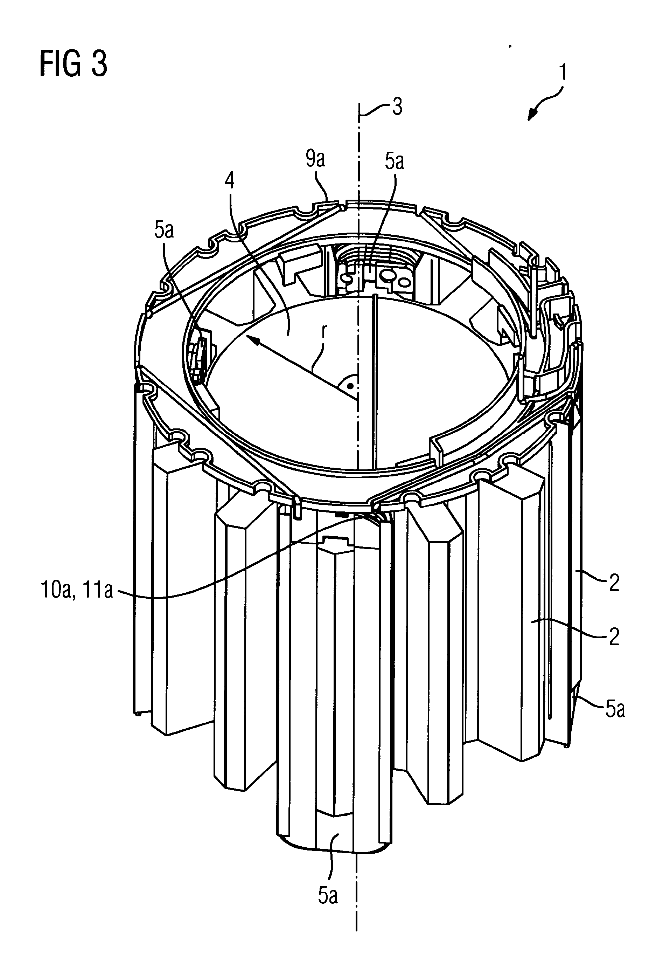

Weiterhin wird an einem axialen Ende der Verbindungsstruktur 4 ein erster Schaltungsträger 9a aufgesetzt. Nach dem Aufsetzen des ersten Schaltungsträgers 9a wird eine erste Phase der Statorwicklung gewickelt. Zu diesem Zweck wird für die erste Phase ein Leiterdraht 10a zunächst auf einen der ersten Phase zugeordneten Spulenträger 5a gewickelt und dadurch eine entsprechende Spule 11a auf diesen Spulenträger 5a gewickelt. Nach dem vollständigen Wickeln der Spule 11a, also nach dem vollständigen Bewickeln des entsprechenden Spulenträgers 5a, wird der Leiterdraht 10a über den ersten Schaltungsträger 9a zum nächsten der ersten Phase zugeordneten Spulenträger 5a geführt. Dort wird dann erneut die entsprechende Spule 11a gewickelt und sodann der Leiterdraht 10a zum wiederum nächsten Spulenträger 5a der ersten Phase geführt. Auf diese Weise wird nach und nach mittels eines einzelnen, durchgehenden Leiterdrahtes 10a die entsprechende Teilwicklung der ersten Phase hergestellt. FIG 3 zeigt den Stator 1 nach dem Herstellen der Teilwicklung der ersten Phase.

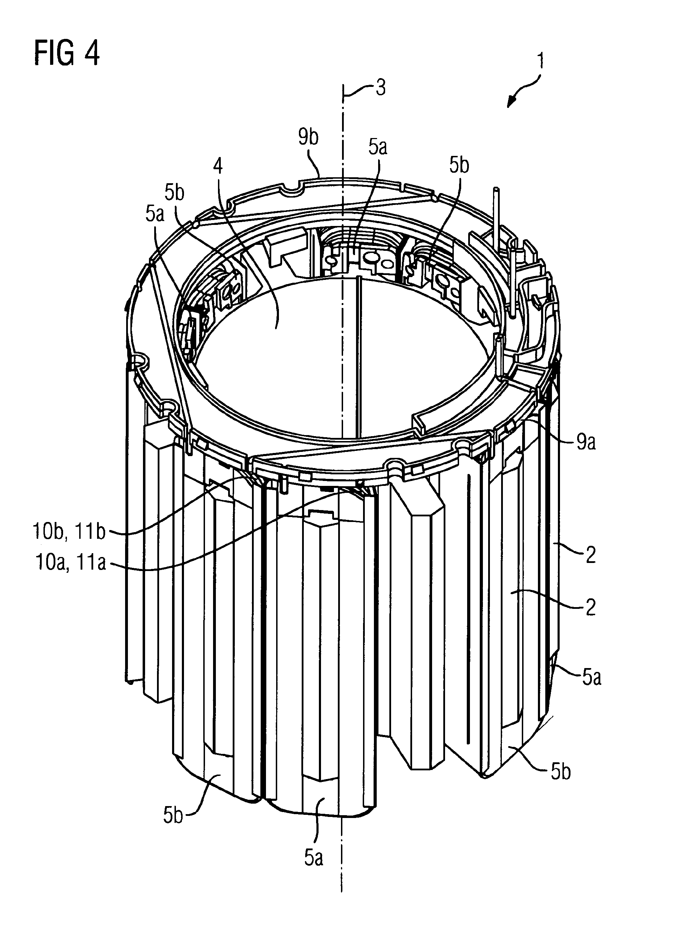

Danach - also erst nach dem vollständigen Bewickeln der der ersten Phase zugeordneten Spulenträger 5a - wird auf den ersten Schaltungsträger 9a ein zweiter Schaltungsträger 9b aufgesetzt. Nach dem Aufsetzen des zweiten Schaltungsträgers 9b wird eine zweite Phase der Statorwicklung gewickelt. Zu diesem Zweck wird für die zweite Phase ein weiterer Leiterdraht 10b zunächst auf einen der zweiten Phase zugeordneten Spulenträger 5b gewickelt und dadurch eine entsprechende Spule 11b auf diesen Spulenträger 5b gewickelt. Nach dem vollständigen Wickeln der Spule 11b, also nach dem vollständigen Bewickeln des entsprechenden Spulenträgers 5b, wird der Leiterdraht 10b über den zweiten Schaltungsträger 9b zum nächsten der zweiten Phase zugeordneten Spulenträger 5b geführt. Dort wird dann erneut die entsprechende Spule 11b gewickelt und sodann der Leiterdraht 10b zum wiederum nächsten Spulenträger 5b der zweiten Phase geführt. Auf diese Weise wird - analog zur ersten Phase - nach und nach mittels eines einzelnen, durchgehenden Leiterdrahtes 10b die entsprechende Teilwicklung der zweiten Phase hergestellt. FIG 4 zeigt den Stator 1 nach dem Herstellen der Teilwicklung der zweiten Phase.

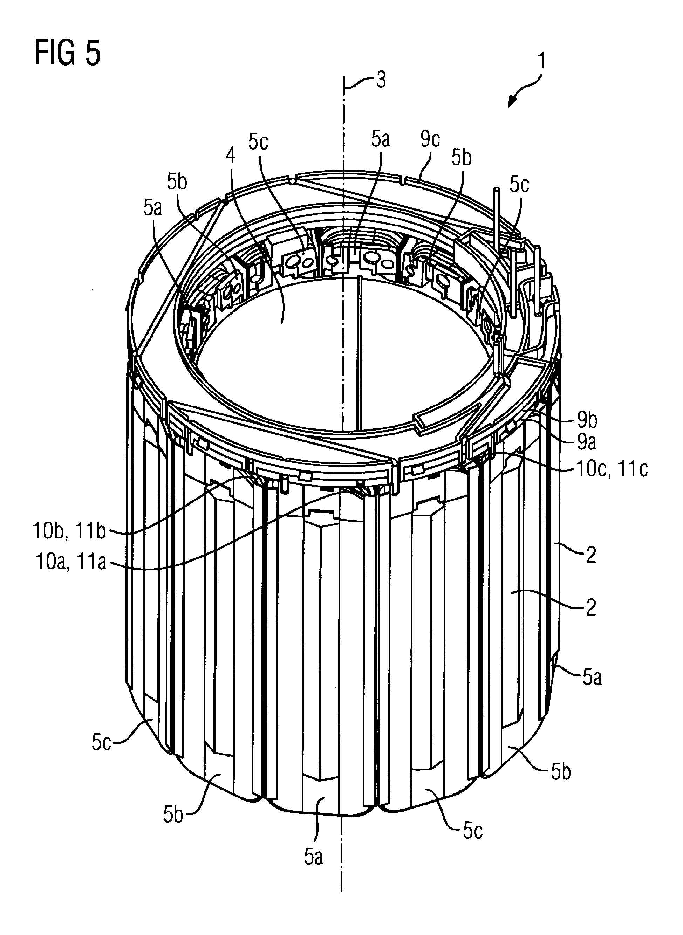

In analoger Weise wird nunmehr - also nach dem vollständigen Bewickeln der der zweiten Phase zugeordneten Spulenträger 5b - auf den zweiten Schaltungsträger 9b ein dritter Schaltungsträger 9c aufgesetzt. Nach dem Aufsetzen des dritten Schaltungsträgers 9c wird eine dritte Phase der Statorwicklung gewickelt. Zu diesem Zweck wird für die dritte Phase ein weiterer Leiterdraht 10c zunächst auf einen der dritten Phase zugeordneten Spulenträger 5c gewickelt und dadurch eine entsprechende Spule 11c auf diesen Spulenträger 5c gewickelt. Nach dem vollständigen Wickeln der Spule 11c, also nach dem vollständigen Bewickeln des entsprechenden Spulenträgers 5c, wird der Leiterdraht 10c über den dritten Schaltungsträger 9c zum nächsten der dritten Phase zugeordneten Spulenträger 5c geführt. Dort wird dann erneut die entsprechende Spule 11c gewickelt und sodann der Leiterdraht 10c zum wiederum nächsten Spulenträger 5c der dritten Phase geführt. Auf diese Weise wird - analog zur ersten Phase und analog zur zweiten Phase - nach und nach mittels eines einzelnen, durchgehenden Leiterdrahtes 10c die entsprechende Teilwicklung der dritten Phase hergestellt. FIG 5 zeigt den Stator 1 nach dem Herstellen der Teilwicklung der dritten Phase.

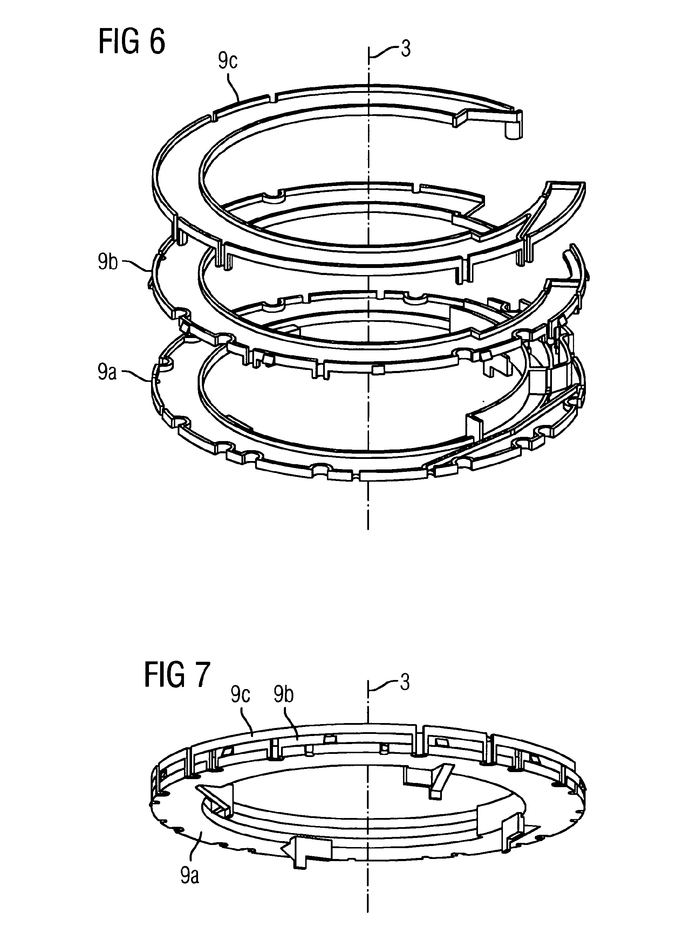

In der Regel weist die Statorwicklung nur drei Phasen auf. In Einzelfällen können jedoch mehr als drei Phasen vorhanden sein, beispielsweise vier oder fünf Phasen. Unabhängig von der Anzahl an Phasen werden die Schaltungsträger 9a bis 9c jedoch stets nacheinander aufgesetzt, so dass sie in Richtung der Zentralachse 3 des Stators 1 gesehen eine Sequenz bilden. Weiterhin wird jeder Schaltungsträger 9b, 9c erst dann aufgesetzt, wenn alle Spulenträger 5a, 5b der jeweils vorhergehenden Phase bewickelt sind. FIG 6 zeigt die Schaltungsträger 9a bis 9c in auseinandergezogener Darstellung, FIG 7 in aneinander angrenzender Darstellung. Aus den FIG 6 und 7 ist insbesondere ersichtlich, dass die Schaltungsträger 9a bis 9c identisch ausgebildet sind. Sie sind lediglich um die Zentralachse 3 gegeneinander verdreht.

Es ist möglich, bereits vor dem Bewickeln der Spulenträger 5a der ersten Phase alle Spulenträger 5a bis 5c auf die Statorzähne 2 aufzustecken. Vorzugsweise jedoch werden entsprechend der Darstellung in den FIG 3 und 4 die Spulenträger 5b der zweiten Phase erst nach dem vollständigen Bewickeln der Spulenträger 5a der ersten Phase auf die Statorzähne 2 aufgesteckt. In analoger Weise werden entsprechend der Darstellung in den FIG 4 und 5 vorzugsweise die Spulenträger 5c der dritten Phase erst nach dem vollständigen Bewickeln der Spulenträger 5b der zweiten Phase auf die Statorzähne 2 aufgesteckt. In analoger Weise wird bei mehr als drei Phasen vorgegangen.

Die vorliegende Erfindung wird vorzugsweise in Verbindung mit einem als Stern-Joch-Paket ausgebildeten Stator 1 verwendet. In diesem Fall wird der Stern durch die Verbindungsstruktur 4 und die von der Verbindungsstruktur 4 nach radial außen ragenden Statorzähne 2 gebildet. Bei einer derartigen Ausgestaltung des Stators 1 wird gemäß FIG 8 nach dem Aufschwenken der mit den Spulen 11a bis 11c versehenen Spulenträger 5a bis 5c auf die Statorzähne 2 axial zur Zentralachse 3 des Stators 1 ein Statorjoch 12 auf die Statorzähne 2 aufgeschoben. Eine Aufschieberichtung x ist also parallel zur Zentralachse 3 des Stators 1 gerichtet. Dadurch werden zum einen die Spulenträger 5a bis 5c unverlierbar fixiert, zum anderen wird dadurch der magnetische Rückschluss vervollständigt.

Die vorliegende Erfindung weist viele Vorteile auf. Insbesondere ist es möglich, die Spulen 11a bis 11c pro Phase mittels eines jeweiligen durchgehenden Leiterdrahtes 10a bis 10c zu wickeln.

Zusammengefasst betrifft die vorliegende Erfindung also folgenden Sachverhalt:
Ein Stator 1 einer elektrischen Maschine weist Statorzähne 2 auf, die, ausgehend von einer in einem radialen Abstand r von einer Zentralachse 3 um diese umlaufenden Verbindungsstruktur 4, nach radial außen ragen. Auf die Statorzähne 2 werden von radial außen Spulenträger 5a bis 5c aufgesteckt. An einem axialen Ende der Verbindungsstruktur 4 werden nacheinander Schaltungsträger 9a bis 9c aufgesetzt, so dass die Schaltungsträger 9a bis 9c in Richtung der Zentralachse 3 gesehen eine Sequenz bilden. Nach dem Aufsetzen je eines Schaltungsträgers 9a bis 9c wird für jeweils eine Phase der Statorwicklung ein jeweiliger Leiterdraht 10a bis 10c nacheinander auf der jeweiligen Phase zugeordnete Spulenträger 5a bis 5c gewickelt, so dass der Leiterdraht 10a bis 10c die Spulen 11a bis 11c der entsprechenden Phase der Statorwicklung bildet. Der jeweilige Leiterdraht 10a bis 10c wird nach dem Bewickeln je eines Spulenträgers 5a bis 5c über den jeweiligen Schaltungsträger 9a bis 9c zum jeweils nächsten der jeweiligen Phase zugeordneten Spulenträger 5a bis 5c geführt. Bezogen auf die Sequenz von Schaltungsträgern 9a bis 9c wird der jeweils nächste Schaltungsträger 9b, 9c erst nach dem vollständigen Bewickeln der der jeweils vorhergehenden Phase zugeordneten Spulenträger 5a, 5b auf den jeweils vorhergehenden Schaltungsträger 9a, 9b aufgesetzt.

Obwohl die Erfindung im Detail durch das bevorzugte Ausführungsbeispiel näher illustriert und beschrieben wurde, so ist die Erfindung nicht durch die offenbarten Beispiele eingeschränkt.

## Patentansprüche

1. Wickelverfahren für eine Statorwicklung eines Stators (1) einer elektrischen Maschine,
- wobei der Stator (1) eine Anzahl von Statorzähnen (2) aufweist, die, ausgehend von einer in einem radialen Abstand (r) von einer Zentralachse (3) des Stators (1) um die Zentralachse (3) umlaufenden Verbindungsstruktur (4), nach radial außen ragen,
- wobei auf die Statorzähne (2) von radial außen Spulenträger (5a bis 5c) aufgesteckt werden,
**dadurch gekennzeichnet, dass**
- an einem axialen Ende der Verbindungsstruktur (4) nacheinander eine Anzahl von Schaltungsträgern (9a bis 9c) aufgesetzt wird, so dass die Schaltungsträger (9a bis 9c) in Richtung der Zentralachse (3) des Stators (1) gesehen eine Sequenz bilden,
- wobei nach dem Aufsetzen je eines einzelnen der Schaltungsträger (9a bis 9c) für jeweils eine Phase der Statorwicklung ein jeweiliger Leiterdraht (10a bis 10c) nacheinander auf der jeweiligen Phase zugeordnete Spulenträger (5a bis 5c) gewickelt wird, so dass der auf die jeweiligen Spulenträger (5a bis 5c) gewickelte jeweilige Leiterdraht (10a bis 10c) jeweilige Spulen (11a bis 11c) der Statorwicklung bildet,
- wobei der jeweilige Leiterdraht (10a bis 10c) nach dem Bewickeln je eines der jeweiligen Phase zugeordneten Spulenträgers (5a bis 5c) über den jeweiligen Schaltungsträger (9a bis 9c) zum jeweils nächsten der jeweiligen Phase zugeordneten Spulenträger (5a bis 5c) geführt wird und
- wobei, bezogen auf die Sequenz von Schaltungsträgern (9a bis 9c), der jeweils nächste Schaltungsträger (9b, 9c) erst nach dem vollständigen Bewickeln der der jeweils vorhergehenden Phase zugeordneten Spulenträger (5a, 5b) auf den in der Sequenz von Schaltungsträgern (9a bis 9c) jeweils vorhergehenden Schaltungsträger (9a, 9b) aufgesetzt wird.

2. Wickelverfahren nach Anspruch 1,
**dadurch gekennzeichnet,**
**dass** die der jeweiligen Phase zugeordneten Spulenträger (5a bis 5c) erst nach dem vollständigen Bewickeln der der jeweils vorhergehenden Phase zugeordneten Spulenträger (5a bis 5c) auf die Statorzähne (2) aufgesteckt werden.

3. Wickelverfahren nach Anspruch 1 oder 2,
**dadurch gekennzeichnet,**
**dass** nach dem vollständigen Bewickeln der Spulenträger (5a bis 5c) aller Phasen axial zur Zentralachse (3) des Stators (1) ein Statorjoch (12) auf die Statorzähne (2) aufgeschoben wird.

4. Stator einer elektrischen Maschine,
- wobei der Stator eine Anzahl von Statorzähnen (2) aufweist, die, ausgehend von einer in einem radialen Abstand (r) von einer Zentralachse (3) des Stators um die Zentralachse (3) umlaufenden Verbindungsstruktur (4), nach radial außen ragen,
- wobei auf die Statorzähne (2) von radial außen Spulenträger (5a bis 5c) aufgesteckt sind,
**dadurch gekennzeichnet, dass**
- an einem axialen Ende der Verbindungsstruktur (4) eine Anzahl von Schaltungsträgern (9a bis 9c) in Richtung der Zentralachse (3) des Stators gesehen in einer Sequenz aufeinander gesetzt ist,
- wobei für jeweils eine Phase der Statorwicklung ein jeweiliger Leiterdraht (10a bis 10c) nacheinander auf der jeweiligen Phase zugeordnete Spulenträger (5a bis 5c) gewickelt ist, so dass der auf die jeweiligen Spulenträger (5a bis 5c) gewickelte jeweilige Leiterdraht (10a bis 10c) jeweilige Spulen (11a bis 11c) der Statorwicklung bildet, und
- wobei der jeweilige Leiterdraht (10a bis 10c) über einen der jeweiligen Phase zugeordneten Schaltungsträger (9a bis 9c) zum jeweils nächsten der jeweiligen Phase zugeordnete Spulenträger (5a bis 5c) geführt ist.

5. Stator nach Anspruch 4,
**dadurch gekennzeichnet,**
**dass** die Statorzähne (2) radial außen von einem axial auf die Statorzähne (2) aufgeschobenen Statorjoch (12) umgeben sind.

## Claims

1. Winding method for a stator winding of a stator (1) of an electric machine,
- wherein the stator (1) has a number of stator teeth (2), which, extending from a connecting structure (4) circulating around the central axis (3) at a radial distance (r) from a central axis (3) of the stator (1), project radially outwards,
- wherein coil carriers (5a to 5c) are attached to the stator teeth (2) from radially outside,
**characterised in that**
- a number of interconnect devices (9a to 9c) are attached one after the other to an axial end of the connecting structure (4), so that the interconnect devices (9a to 9c) form a sequence when viewed in the direction of the central axis (3) of the stator (1),
- wherein after attaching each individual interconnect device (9a to 9c) for each one phase of the stator winding, a respective conductor wire (10a to 10c) is wound consecutively on coil carriers (5a to 5c) assigned to the respective phase, so that the respective conductor wire (10a to 10c) wound on the respective coil carrier (5a to 5c) forms respective coils (11a to 11c) of the stator winding,
- wherein after winding each one of the coil carriers (5a to 5c) assigned to the respective phase, the respective conductor wire (10a to 10c) is guided via the respective interconnect device (9a to 9c) to in each case the next coil carrier (5a to 5c) assigned to the respective phase and
- wherein, in respect of the sequence of interconnect devices (9a to 9c), the in each case next interconnect device (9b, 9c) is only attached to the interconnect device (9a, 9b) preceding in each case in the sequence of interconnect devices (9a to 9c) after the complete winding of the coil carrier (5a, 5b) assigned to the respective preceding phase.

2. Winding method according to claim 1,
**characterised in that**
the coil carrier (5a to 5c) assigned to the respective phase is only attached to the stator teeth (2) after the complete winding of the coil carrier (5a to 5c) assigned to the respective preceding phase.

3. Winding method according to claim 1 or 2,
**characterised in that**
a stator yoke (12) is pushed onto the stator teeth (2) after the complete winding of the coil carriers (5a to 5c) of all phases axially with respect to the central axis (3) of the stator.

4. Stator of an electric machine,
- wherein the stator has a number of stator teeth (2), which, extending from a connecting structure (4) circulating around the central axis (3) at a radial distance (r) from the central axis (3) of the stator, project radially outwards,
- wherein coil carriers (5a to 5b) are attached to the stator teeth (2) from radially outside,
**characterised in that**
- a number of interconnect devices (9a to 9c) are set sequentially in a sequence at one axial end of the connecting structure (4) when viewed in the direction of the central axis (3) of the stator,
- wherein a respective conductor wire (10a to 10c) is wound successively onto the coil carrier (5a to 5c) assigned to the respective phase for in each case one phase of the stator winding, so that the respective conductor wire (10a to 10c) wound onto the respective coil carrier (5a to 5c) forms respective coils (11a to 11c) of the stator winding, and
- wherein the respective conductor wire (10a to 10c) is guided via an interconnect device (9a to 9c) assigned to the respective phase to the respective next coil carrier (5a to 5c) assigned to the respective phase.

5. Stator according to claim 4,
**characterised in that**
the stator teeth (2) are surrounded radially outwards by a stator yoke (12) pushed axially onto the stator teeth (2).

## Revendications

1. Procédé d'enroulement d'un stator (1) d'une machine électrique,
- dans lequel le stator ( 1 ) a un certain nombre de dents ( 2 ) de stator qui, en partant d'une structure ( 4 ) de liaison autour d'un axe ( 3 ) central du stator ( 1 ) à une distance ( r ) radiale de celui-ci ( 3 ), font saillie radialement vers l'extérieur,
- dans lequel on enfiche sur les dents ( 2 ) du stator des porte-bobine ( 5a à 5c ) de l'extérieur radialement,
**caractérisé en ce que**
- on met à une extrémité axiale de la structure ( 4 ) de liaison les uns après les autres un certain nombre de porte-circuit ( 9a à 9c ) de manière à ce que les porte-circuit ( 9a à 9c ) forment une séquence considérée dans la direction de l'axe ( 3 ) central du stator ( 1 ),
- dans lequel, après avoir mis respectivement l'un des porte-circuit ( 9a à 9c ), on enroule pour respectivement une phase de l'enroulement de stator un fil ( 10a à 10c ) conducteur respectif l'un après l'autre sur le porte-bobine ( 5a à 5c ) associé à la phase respective de manière à ce que le fil ( 10a à 10c ) conducteur respectif, enroulé sur le porte-bobine ( 5a à 5c ) respectif, forme des bobines ( 11a à 11c ) respectives de l'enroulement du stator,
- dans lequel on fait passer le fil ( 10a à 10c ) conducteur respectif, après l'enroulement de respectivement l'un des porte-bobine ( 5a à 5c ) associé à la phase respective, par l'intermédiaire du porte-circuit ( 9a à 9c ) respectif vers respectivement le porte-bobine ( 5a à 5c ) le plus proche associé à la phase respective et
- dans lequel, rapporté à la séquence des porte-circuit ( 9a à 9c ), on met le porte-circuit ( 9b, 9c ) le plus proche seulement après avoir enroulé complètement le porte-bobine ( 5a à 5c ) associé à la phase précédente respective sur le porte-circuit ( 9a, 9b ) précédent respectivement dans la séquence des porte-circuit ( 9a à 9c ).

2. Procédé d'enroulement suivant la revendication 1, **caractérisé en ce que** l'on enfiche sur les dents du stator les porte-bobine ( 5a à 5c ) associés à la phase respective seulement après l'enroulement complet des porte-bobine ( 5a à 5c ) associés à la phase précédente respective.

3. Procédé d'enroulement suivant la revendication 1 ou 2, **caractérisé en ce qu'**après l'enroulement complet des porte-bobine ( 5a à 5c ), de toutes les phases, on met axialement par rapport à l'axe ( 3 ) central du stator ( 1 ) une culasse ( 12 ) de stator sur les dents ( 2 ) du stator.

4. Stator d'une machine électrique,
- dans lequel le stator a un certain nombre de dents de stator qui, en partant d'une structure ( 4 ) de liaison autour d'un axe ( 3 ) central du stator à une distance ( r ) radiale de celui-ci ( 3 ) font saillie radialement vers l'extérieur,
- dans lequel des porte-bobine ( 5a à 5c ) sont enfichées de l'extérieur radialement sur les dents du stator,
**caractérisé en ce que**
- à une extrémité axiale de la structure ( 4 ) de liaison, sont mis les uns sur les autres, en une séquence considérée dans la direction de l'axe ( 3 ) central du stator, un certain nombre de porte-circuit ( 9a à 9c ),
- dans lequel, pour respectivement une phase de l'enroulement de stator, un fil ( 10a à 10c ) conducteur respectif est enroulé l'un après l'autre sur le porte-bobine ( 5a à 5c ) associé à la phase respective de manière à ce que le fil ( 10a à 10c ) conducteur respectif enroulé sur le porte-bobine ( 5a à 5c ) respectif forme des bobines ( 11a à 11c ) respectives de l'enroulement du stator et
- dans lequel le fil ( 10a à 10c ) conducteur respectif passe par l'intermédiaire d'un porte-circuit ( 9a à 9c ), associé à la phase respective, vers respectivement le porte-bobine ( 5a à 5c ) le plus proche, associé à la phase respective.

5. Stator suivant la revendication 4,
**caractérisé en ce que** les dents ( 2 ) du stator sont entourées radialement à l'extérieur par une culasse ( 12 ) de stator mise axialement sur les dents ( 2 ) du stator.
